(19) **Europäisches Patentamt**

**European Patent Office**

**Office européen des brevets**

(11) Veröffentlichungsnummer: **0 433 877 B1**

(12) # EUROPÄISCHE PATENTSCHRIFT

(45) Veröffentlichungstag der Patentschrift: **24.05.95**

(21) Anmeldenummer: **90124025.9**

(22) Anmeldetag: **13.12.90**

(51) Int. Cl.6: **C08L 57/08**, C08L 51/00,
//(C08L57/08,51:00)

(54) **Thermoplastische Formmasse.**

(30) Priorität: **22.12.89 DE 3942533**

(43) Veröffentlichungstag der Anmeldung:
**26.06.91 Patentblatt 91/26**

(45) Bekanntmachung des Hinweises auf die
Patenterteilung:
**24.05.95 Patentblatt 95/21**

(84) Benannte Vertragsstaaten:
**BE DE ES FR GB IT NL**

(56) Entgegenhaltungen:
**EP-A- 0 158 347**
**FR-A- 2 069 129**
**GB-A- 2 023 150**

(73) Patentinhaber: **BASF Aktiengesellschaft
Carl-Bosch-Strasse 38
D-67063 Ludwigshafen (DE)**

(72) Erfinder: **Hungenberg, Klaus-Dieter, Dr.
Ortsstrasse 135
W-6943 Birkenau (DE)**
Erfinder: **Oschmann, Werner, Dr.
Buergermeister-Horlacher-Strasse 44
W-6700 Ludwigshafen (DE)**

**Beschreibung**

Die vorliegende Erfindung betrifft thermoplastische Formmassen, enthaltend

A) 98 bis 40 Gew.-% eines Vinylhalogenidpolymerisats

B) 2 bis 60 Gew.-% eines Pfropfmischpolymerisats

aufgebaut aus $b_1$) 4 bis 30 Gew.-% einer Pfropfgrundlage mit einer Glasübergangstemperatur kleiner 0°C, $b_2$) 94 bis 50 Gew.-% einer oder mehrerer innerer Pfropfhüllen aufgebaut aus

$b_{21}$) 3 - 40 Gew.-% mindestens eines N-substituierten Maleinimids

$b_{22}$) 0 - 97 Gew.-% mindestens eines Alkylesters der Methacrylsäure

$b_{23}$) 0 - 80 Gew.-% mindestens einer aromatischen Vinylverbindung

$b_{24}$) 0 - 60 Gew.-% mindestens eines ungesättigten Nitrils

$b_{25}$) 0 - 20 Gew.-% weiterer Monomere

und $b_3$) 2 bis 20 Gew.-% einer von den Pfropfhüllen $b_2$) verschiedenen äußeren Pfropfhülle, die zu mehr als 60 Gew.-% aus einem Alkylmethacrylat mit 1 - 8 C-Atomen im Alkylteil oder einer Mischung aus einer aromatischen Vinylverbindung und Acrylnitril im Gewichtsverhältnis 10:1 bis 1:1 besteht.

Um die Anwendungsbreite von Vinylhalogenidharzmassen, vor allem PVC, zu erweitern, werden den Harzen Modifizierungsmittel Zugesetzt, die Verbesserungen bezüglich der wärmeformbeständigkeit oder der Schlagzähigkeit bewirken sollen.

In der JP-A-61264037, der JP-A-62240344 und der JP-A-61162543 werden als Modifizierungsmittel für Vinylhalogenidharzmassen Copolymere aus einem N-substituierten Maleinimid und Methylmethacrylat beschrieben. Diese Copolymere erhöhen zwar die Wärmeformbeständigkeit, verschlechtern aber die Schlagzähigkeit.

In der JP-A-61185512 wird ein Verfahren zur Herstellung eines Copolymeren aus α-Alkylstyrol, (Meth)acrylnitril und gegebenenfalls einem N-substituierten Maleinimid durch Masse-/Suspensionspolymerisation beschrieben. Das erhaltene Copolymer kann zur Modifizierung von PVC eingesetzt werden und erhöht dessen Wärmeformbeständigkeit.

Alle diese Mischungen aus PVC und den zitierten Copolymeren sind jedoch nur eingeschränkt einsetzbar, da sie zwar eine gegenüber PVC erhöhte Wärmeformbeständigkeit besitzen, auf der anderen Seite aber stark versprödet sind.

Aus der EP-A-53080 bzw. der US-A-4458046 sind Mischungen aus PVC mit einem kautschukmodifizerten Styrol/Maleinimid-Copolymer bzw. einem Styrol/Maleinimid/Maleinsäureanhydrid-Copolymer bekannt. Bei angehobener Wärmeformbeständigkeit ist die Schlagzähigkeit der Produkte immer noch unbefriedigend.

Aufgabe der vorliegenden Erfindung war es daher, die Wärmeformbeständigkeit von Vinylhalogenidpolymeren zu verbessern und gleichzeitig Produkte mit guter Schlagzähigkeit zu erhalten.

Demgemäß wurden die eingangs definierten thermoplastischen Formmassen gefunden.

Die erfindungsgemäße thermoplastische Formmasse enthält A) 98 bis 40 Gew.-%, bevorzugt 90 bis 70 Gew.-% eines Vinylhalogenidpolymeristats, bevorzugt Polyvinylchlorid und B) 2 bis 60 Gew.-%, bevorzugt 10 bis 30 Gew.-%, eines Pfropfmischpolymerisats.

Das Pfropfmischpolymerisat enthält als Pfropfgrundlage $b_1$) 4 bis 30 Gew.-% bevorzugt 10 bis 28 Gew.-%, bezogen auf das Pfropfmischpolymerisat, eines Kautschukartigen Polymeren mit einer Glasübergangstemperatur kleiner 0°C.

Kautschukartige Polymere sind durch Emulsionspolymerisation geeigneter Monomere oder Monomergemische erhältlich.

Die Polymerisation kann unter den für Emulsionspolymerisation üblichen Bedingungen der radikalischen Polymerisation erfolgen, wie sie z.B. in der Monographie von Blackley ("Emulsion Polymerization") beschrieben sind.

Kautschukartige Polymere können erhalten werden durch Polymerisation von mehrfach ungesättigten Monomeren oder Copolymerisation der mehrfach ungesättigten Monomeren mit weiteren radikalisch Polymerisierbaren, einfach ungesättigten Monomeren. Kautschukartige Polymere sind im allgemeinen durch eine zumindest teilweise Vernetzung der Polymerketten gekennzeichnet. Eine solche Vernetzung kann auch erreicht werden, wenn einfach ungesättigte Monomere in Gegenwart von mehrfunktionellen Vernetzern polymerisiert werden.

Als kautschukartiges Polymer mit einer Glasübergangstemperatur unter 0°C finden bevorzugt Homopolymerisate von Dienen wie Butadien oder Isopren Verwendung.

Ebenfalls bevorzugt finden Copolymerisate der konjugierten Diene mit Styrol, α-Methylstyrol, $C_2$ bis $C_8$ Alkylestern der Acrylsäure vorzugweise n-Butylacrylat und/oder 2 Ethylhexylacrylat Verwendung; darüber hinaus sind auch Polymerisate auf der Basis von $C_2$-$C_8$-Alkylestern der (Meth)acrylsäure geeignet.

Als mehrfunktionelle Vernetzer können bei der Copolymerisation von einfach ungesättigten Monomeren mit Dienen z.B. Acryl- oder Methacrylsäureester mehrwertiger Alkohole wie z.B. Butandioldiacrylat, Trimethylolpropantriacrylat, Vinylether mehrwertiger Alkohole wie Butandioidivinylether, Vinylester mehrwertiger Säuren wie Adipinsäuredivinylester, Allyl-, Methallyl-, Crotylester und -ether wie z.B. Triallylcyanurat, Diallylphthalat, Allylacrylat, Methallylmethacrylat, Crotonsäurevinylester eingesezt werden.

Bei den kautschukartigen Polymeren kann es sich um statistische Copolymere oder Blockcopolymere handeln. Es ist auch möglich, das ein kautschukartiges Polymer bildende Monomer bzw. Monomerengemisch in Gegenwart eines bereits vorhandenden Polymeren zu polymerisieren, so daß das gebildete kautschukartige, Polymer nur in der äußeren Hülle eines Polymerteilchens vorliegt.

Das Pfropfmischpolymerisat B) enthält 94 bis 50 Gew.-%, bevorzugt 88 bis 57 Gew.-%, bezogen auf das Pfropfmischpolymerisat, einer oder mehrerer innerer Pfropfhüllen $b_2$).

Die innere bzw. die inneren Pfropfhüllen $b_2$) enthalten

$b_{21}$) 3 - 40 Gew.-% mindestens eines N-substituierten Maleinimids

$b_{22}$) 0 - 97 Gew.-% mindestens eines Alkylesters der Methacrylsäure

$b_{23}$) 0 - 80 Gew.-% mindestens einer aromatischen Vinylverbindung

$b_{24}$) 0 - 60 Gew.-% mindestens eines ungesättigten Nitrils

$b_{25}$) 0 - 20 Gew.-% weiterer Monomere.

Bevorzugt bestehen die inneren Pfropfhüllen $b_2$) aus

$b_{21}$) 3 - 40 Gew.-% mindestens eines N-substituierten Maleinimids

$b_{22}$) 60 - 97 Gew.-% mindestens eines Alkylesters der Methacrylsäure

$b_{23}$) 0 - 20 Gew.-% mindestens einer aromatischen Vinylverbindung

oder

$b_{21}$) 3 - 40 Gew.-% mindestens eines N-substituierten Maleinimids

$b_{23}$) 10 - 80 Gew.-% mindestens einer aromatischen Vinylverbindung

$b_{24}$) 3 - 60 Gew.-% mindestens eines ungesättigten Nitrils

$b_{25}$) 0 - 20 Gew.-% weiterer Monomere.

Im letzteren Fall liegt das Gewichtsverhältnis der aromatischen Vinylverbindung zum ungesättigten Nitril vorzugsweise zwischen 10:1 und 1:1.

Besonders bevorzugt besteht die innere Pfropfhülle bzw. die inneren Pfropfhüllen $b_2$) aus

$b_{21}$) 5 - 30 Gew.-% mindestens eines N-substituierten Maleinimids

und

$b_{22}$) 70 - 95 Gew.-% mindestens eines Alkylesters der Methacrylsäure

oder

$b_{21}$) 5 - 30 Gew.-% mindestens eines N-substituierten Maleinimids

$b_{23}$) 77,3 - 35 Gew.-% mindestens einer aromatischen Vinylverbindung

und

$b_{24}$) 7,7 - 35 Gew.-% mindestens eines ungesättigten Nitrils

wobei das Gewichtsverhältnis der aromatischen Vinylverbindung zum ungesättigten Nitril vorzugsweise zwischen 10:1 und 1:1 liegt.

Ganz besonders bevorzugt besteht die innere Pfropfhülle, bzw. die inneren Propfhüllen $b_2$) aus

$b_{21}$) 5 - 30 Gew.-% mindestens eines N-substituierten Maleinimids

$b_{23}$) 70 - 35 Gew.-% mindestens einer aromatischen Vinylverbindung

und

$b_{24}$) 15 - 35 Gew.-% mindestens eines ungesättigten Nitrils

wobei das Gewichtsverhältnis von aromatischer Vinylverbindung zum ungesättigten Nitril vorzugsweise zwischen ca. 4,5:1 und 1,5:1 liegt.

Bevorzugt eingesetzte N-substituierte Maleinimide $b_{21}$) sind am N-Atom durch eine $C_1$-$C_{12}$-Alkyl, eine $C_5$-$C_{15}$-Cycloalkyl- oder $C_6$-$C_{15}$-Arylgruppe substituiert.

Besonders bevorzugt sind N-Methyl-, N-Cyclohexyl- sowie N-Phenylmaleinimid. Ganz besonders bevorzugt ist N-Phenylmaleinimid.

Bei den Alkylestern der Methacrylsäure $b_{22}$) handelt es sich bevorzugt um $C_1$- bis $C_{10}$-Alkylester, besonders bevorzugt um $C_1$- bis $C_5$-Alkylester, ganz besonders bevorzugt um Methylmethacrylat.

Bei den aromatischen Vinylverbindungen $b_{23}$) handelt es sich bevorzugt um Styrol, kernsubstituierte Styrole, wie p-Methylstyrol oder α-alkylsubstituierte Styrole, z.B. α-Methylstyrol. Besonders bevorzugt handelt es sich um α-Methylstyrol.

Beim ungesättigten Nitril $b_{24}$) handelt es sich bevorzugt um Acrylnitril oder Methacrylnitril, insbesondere Acrylnitril.

Weitere Monomere, welche als Comonomere eingesetzt werden können, sind z.B. (Meth)acrylamide, wie N-Methyl oder N-Phenylmethacrylamid, nichtaromatische Vinylverbindungen wie Vinylacetat oder Vinylether.

Die Aufzählung ist keinesfalls vollständig, es soll nur verdeutlicht werden, welcher Art die Monomeren sind, aus denen ausgewählt werden kann.

Das Pfropfmischpolymerisat enthält 2 bis 20 Gew.-% bevorzugt 2 bis 15 Gew.-% einer von den Pfropfhüllen $b_2$) verschiedenen äußeren Pfropfhülle $b_3$), welche zu mehr als 60 Gew.-% aus einem Alkylester der Methacrylsäure mit 1 bis 8 C-Atomen oder zu mehr als 60 Gew.-% aus einer aromatischen Vinylverbindung und einer ungesättigten Nitrilverbindung im Gewichtsverhältnis 10:1 bis 1:1 besteht.

Bevorzugt besteht die äußere Pfropfhülle zu mehr als 60 Gew.-% aus einem $C_1$- bis $C_8$-Alkylester der Methacrylsäure, besonders bevorzugt besteht die äußere Pfropfhülle zu mehr als 80 Gew.-%, ganz besonders bevorzugt zu 100 % aus einem $C_1$- bis $C_8$-Alkylester der Methacrylsäure.

Bei der aromatischen Vinylverbindung und dem ungesättigten Nitril in der äußeren Pfropfhülle $b_3$) handelt es sich bevorzugt um Styrol und Acrylnitril.

Bei dem Alkylester der Methacrylsäure in der äußeren Pfropfhülle $b_3$) handelt es sich bevorzugt um Methylmethacrylat.

Die Pfropfmischcopolymerisate können durch Emulsionspolymerisation hergestellt werden.

Die Emulsionspolymerisation kann in den einzelnen Stufen unter üblichen und bekannten Bedingungen erfolgen. Als Emulgatoren können z.B. anionische Emulgatoren, wie Alkalisalze von Fettsäuren wie Natriumlaurat, Dialkylsulfosuccinate, Salze von Alkyl- oder Arylsulfonaten, oder kationische Emulgatoren, wie Salze von quaternären Alkylammoniumverbindungen, oder nichtionische Emulgatoren wie Poly(oxyethylen)-nonylphenylether eingesetzt werden.

Als Initiatoren Können z.B. übliche wasserlösliche thermisch zerfallende Initiatoren wie $Na_2S_2O_8$, $(NH_4)_2S_2O_8$ oder Redoxinitiatoren wie z.B. $Na_2S_2O_8/Na_2S_2O_5$, t-Butylhydroperoxid/Natriumformaldehydsulfoxylat eingesetzt werden.

Es könen auch andere für die Emulsionspolymerisation bekannte Emulgatoren, Initiatoren und gegebenenfalls weitere Hilfsstoffe wie Puffer und Regler Zugesetzt werden.

Die Emulsionspolymerisation Kann bei Temperaturen zwischen 30 und 95 °C erfolgen.

Zunächst kann ein kautschukartiges Polymer mit einer Glasübergangstemperatur unter 0 °C in bekannter Weise durch Emulsionspolymerisation hergestellt werden. In Gegenwart des kautschukartigen Polymeren erfolgt dann die Polymerisation der Pfropfhüllen. Die Monomeren der einzelnen Pfropfhüllen werden zudosiert und zu mehr als 70 Gew.-%, bevorzugt zu mehr als 90 Gew.-%, besonders bevorzugt zu mehr als 95 Gew.-% auspolymerisiert, bevor mit der Zugabe der Monomeren der folgenden Pfropfhülle begonnen wird.

Die Pfropfmischpolymerisate können aus der erhaltenen Emulsion bzw. Dispersion durch bekannte Verfahren wie Fällung oder Sprühtrocknung gewonnen werden.

Die Herstellung der PVC-Formmassen aus PVC und dem Pfropfmischpolymerisat erfolgt nach bekannten Verfahren (s. z.B. Kunststoff-Handbuch, Bd. 2/1, 2/2, 2. Auflage), gegebenenfalls unter Zugabe von Hilfsstoffen wie Stabilisatoren, Gleitmittel, Füllstoffe, Farbstoffe, Pigmente, oder von weiteren Modifizierungsmitteln zur Verbesserung der Transparenz, Witterungsbeständigkeit, Wärmeformbeständigkeit, Schlagzähigkeit etc.

Die Bestandteile der thermoplastischen Formmasse werden mit geeigneten Mischern (Extruder, Kneter, Walzen) gemischt und durch für Thermoplaste übliche Methoden (Extrudieren, Spritzgießen, Kalandrieren, Pressen, Tiefziehen u. ä.) in die gewünschte Form gebracht.

Die erfindungsgemäßen thermoplastischen Formmassen zeichnen sich durch deutlich erhöhte Wärmeformbeständigkeit und eine sehr gute Schlagzähigkeit aus und eignen sich daher besonders zur Herstellung von Formkörpern jeglicher Art.


Beispiele


Herstellung des Kautschuks I


In einem 10 l-Dreihalskolben mit Rührer, Rückflußkühler, Thermometer und Stickstoffeinleitung wurden vorgelegt

1600 g $H_2O$

4 g einer 40 %igen Lösung von Na-Salzen eines Gemisches von $C_{12}$-$C_{18}$-Alkylsulfonaten

8 g $Na_2S_2O_8$

Die Vorlage wurde unter Stickstoffatmosphäre auf 70°C aufgeheizt. Innerhalb von 3 h wurde ein Gemisch aus

3200 g $H_2O$

3200 g n-Butylacrylat

32 g Triallylcyanurat

76 g einer 40 %igen Lösung von Na-Salzen eines Gemisches von $C_{12}$-$C_{18}$-Alkylsulfonaten

zudosiert und noch 1 h bei 70°C nachpolymerisiert und dann auf Raumtemperatur gekühlt. Die entstandene Dispersion hatte einen Feststoffgehalt von 39,0 %.

Herstellung des Kautschuks II

In einem für Emulsionspolymerisation unter Druck geeigneten Reaktor wurden vorgelegt:

11,66 kg $H_2O$

0,097 kg t-Dodecylmercaptan

0,015 kg einer 40 %igen Lösung von Na-Salzen eines Gemisches von $C_{12}$-$C_{18}$-Alkylsulfonaten

0,113 kg einer 45 %igen Lösung eines Di-Natriumsalzes eines alkylierten, zweifach sulfonierten Diphenylethers

0,019 kg Natriumpersulfat

1,6 kg des Gemisches 1

wobei das Gemisch 1 zusammengesetzt war aus

6,000 kg $H_2O$

0,019 kg Natriumhydrogencarbonat

0,004 kg Natriumpyrophosphat

0,152 kg einer 45 %igen Lösung eines Dinatriumsalzes eines alkylierten, zweifach sulfonierten Diphenylethers

6,950 kg Butadien

2,900 kg Styrol

Der mit der Vorlage gefüllte Reaktor wurde 3 x mit Stickstoff abgedrückt und der Inhalt auf 80°C aufgeheizt. Nach 20 min bei 80°C wurde mit dem Zulauf des Gemisches 1 begonnen. Das Gemisch 1 wurde gleichzeitig mit einer Lösung aus

0,400 kg $H_2O$

0,019 kg $Na_2S_2O_8$

während 8 h in den Reaktor eindosiert. Nach Ablauf der 8 h wurde die Temperatur für weitere 4 h bei 80°C gehalten und dann gekühlt. Der Feststoffgehalt der Dispersion betrug 32,2 %.

Herstellung des Kautschuks III

In einem für Emulsionspolymerisation unter Druck geeigneten Reaktor wurden vorgelegt:

18,000 kg $H_2O$

0,300 kg einer 40 %igen Lösung von Na-Salzen eines Gemisches von $C_{12}$-$C_{18}$-Alkylsulfonaten

0,015 kg Natriumpersulfat

0,015 kg Natriumpyrophosphat

Der mit der Vorlage gefüllte Reaktor wurde 3 x mit $N_2$ abgedrückt und auf 70°C aufgeheizt. Bei Erreichen von 70°C Innentemperatur wurde ein Gemisch aus

5,81 kg Styrol

0,06 kg 1,4-Butandioldiacrylat

0,18 kg Butadien

während 1 h zudosiert und nach Beendigung des Zulaufs die Temperatur 1 h bei 70°C gehalten. Anschließend wurden

6,40 kg n-Butylacrylat und

0,20 kg Butadien

und gleichzeitig dazu eine Lösung aus

1 kg $H_2O$

0,013 kg Natriumpersulfat

während 1 h bei 70°C zudosiert. Nach einer weiteren Stunde Nachpolymerisationszeit bei 70°C wurde gekühlt. Der Feststoffgehalt betrug 38,4 %.

5

Herstellung der Pfropfpolymerisate

Vergleichsbeispiel V1

In einem Reaktor wurden vorgelegt
400 g Dispersion des Kautschuks I ($\triangleq$ 156 g Feststoff)
370 g $H_2O$
4,4 g 80 %iges t-Butylhydroperoxid
5 mg $FeSO_4 \cdot 7H_2O$
und unter Stickstoff auf 60°C aufgeheizt. Dazu wurde ein Gemisch Z1 aus
487 g $H_2O$
24,5 g einer 40 %igen Lösung von Na-Salzen eines Gemisches von $C_{12}$-$C_{18}$-Alkylsulfonaten
2,8 g Natriumpyrophosphat
560 g Methylmethacrylat (MMA)
140 g N-Phenylmaleinimid (NPMI)
während 4 h zudosiert. Gleichzeitig mit dem Beginn des Zulaufs von Z1 wurde mit der Dosierung einer Lösung Z2 aus
3,5 g Na-Formaldehydsulfoxylat und
72 g $H_2O$
begonnen, die während 8 h zulief. 3 h und 7 h nach Beginn des Zulaufs von Z1 und Z2 wurde jeweils eine Mischung aus 2,2 g t-Butylhydroperoxid (80 %ig) und 25 g $H_2O$ in den Reaktor gegeben. 1 h nach dem Ende des Zulaufs wurde eine Lösung aus
8,7 g einer 40 %igen Lösung von Na-Salzen eines Gemisches von $C_{12}$-$C_{18}$-Alkylsulfonaten in
25 g $H_2O$
unter Rühren zugegeben und das Reaktionsgemisch abgekühlt. Das Festprodukt wurde durch Gefrierkoagulation und Filtration gewaschen und getrocknet.

Vergleichsbeispiel V2

Es wurde verfahren wie in V1 beschrieben. Statt der Dispersion des Kautschuks I wurden 484 g ($\triangleq$ 156 g Feststoff) des Kautschuks II und 300 g $H_2O$ in die Vorlage gegeben.

Beispiel 1

Die Herstellung erfolgte zunächst wie für Vergleichsbeispiel 1 beschrieben. In Z1 wurden jedoch 560 g MMA und 140 g NPMI durch 60 g $\alpha$-Methylstyrol ($\alpha$-MS), 539 g MMA und 66 g NPMI ersetzt. Zusätzlich wurden 6 und 7 Stunden nach Beginn der Dosierung von Z1 und Z2 jeweils 35 g MMA dem Reaktionsgemisch zudosiert.

Beispiele 2 bis 9

Die weiteren Beispiele aus Tabelle 1 wurden entsprechend Beispiel 1 hergestellt. Dabei wurden in Z1 die Monomermengen entsprechend der Tabelle 1 geändert. In der Vorlage wurden die Wassermengen und Dispersionsmengen wie folgt gewählt:

Für Kautschuk 1     400 g Kautschukdispersion I 370 g $H_2O$
Für Kautschuk II     484 g Kautschukdispersion II 300 g $H_2O$
Für Kautschuk III     410 g Kautschukdispersion III 360 g $H_2O$

Herstellung der Formmassen:

50 Gew.-% PVC (K-Wert 61)
50 Gew.-% Modifier aus Tabelle 1, Vergleichsbeispiel 1 bis 2 und Beispiel 1 bis 9, sowie $\alpha$-MS/AN Modifier Vinuran 3841 in V4
1 Gew.-% Irgastab 17 MOK
( = Di-n-octylzinnbisthiogylkolsäureisooctyleester)
1 Gew.-% Loxiol G16 (Glycerindioleat)
0,2 Gew.-% E-Wachs (vermischter Montansäureester mit Ethylenglykol, 1,3-Butandiol)
wurden auf einem Walzwerk bei 200°C über 8 min gewalzt.

Aus der so hergestellten Mischung wurden 4 mm dicke Rundscheiben ($\Phi$ = 15 mm) zur Bestimmung der Vicat-Temperatur und 4 mm dicke Platten gepreßt. Aus den Platten wurden Normkleinstäbe herausgearbeitet, an denen die Schlagzähigkeit geprüft wurde

Preßbedingungen:

180 °C, 200 bar, Zyklus: 3 min Vorheizen, 2 min Pressen, 3 min Abkühlen

BASF Aktiengesellschaft

Tabelle 1

| lfd. Nr. | Kautschuk Menge [Feststoff] | Art | 1. Stufe NPMI [g] | MMA [g] | α-MS [g] | AN [g] | 2. Stufe MMA [g] | Eigenschaften einer 1:1 PVC-Mischung Vicat B/59 DIN 53 460 [°C] | Lochkerbschlag-zähigkeit DIN 53 753 [kJ/m²] bei 23°C | Lochkerbschlag-zähigkeit DIN 53 753 [kJ/m²] bei 0°C | Schlagbiege-zähigkeit DIN 53 453-n [kJ/m²] bei 23°C |
|---|---|---|---|---|---|---|---|---|---|---|---|
| 1 | 156 | I | 66 | 539 | 60 | | 35 | 90,1 | 27,9 | 12,8 | kein Bruch |
| 2 | 156 | II | 66 | 539 | 60 | | 35 | 89,8 | 25,9 | 12,0 | 77,2 |
| 3 | 156 | I | 66 | | 419 | 180 | 35 | 91,7 | 42,6 | 33,5 | kein Bruch |
| 4 | 156 | II | 66 | | 419 | 180 | 35 | 89,5 | 24,0 | 25,0 | kein Bruch |
| 5 | 156 | III | 66 | | 419 | 180 | 35 | 90,4 | 44,0 | 15,0 | kein Bruch |
| 6 | 156 | II | 100 | | 396 | 169 | 35 | 89,9 | 37,0 | 29,4 | kein Bruch |
| 7 | 156 | III | 100 | | 396 | 169 | 35 | 89,1 | 20,6 | 13,5 | kein Bruch |
| 8 | 156 | I | 133 | | 372 | 160 | 35 | 92,4 | 22,3 | 10,9 | 74,9 |
| 9 | 156 | II | 133 | | 372 | 160 | 35 | 90,6 | 35,3 | 26,3 | kein Bruch |
| V1 | 156 | I | 140 | 560 | | | | 90,2 | 17,4 | 10,5 | 55,3 |
| V2 | 156 | II | 140 | 560 | | | | 91,3 | 12,5 | 9,6 | 22,9 |
| V3 | 100 Tl. PVC, S6115, K-Wert 61 | | | | | | | 76,2 | 31 | 19 | 35 |
| V4 | Mischung aus 50 Tl. PVC, S6115 + 50 Tl. α-MS/AN-Copolymer (Vinuran 3841) | | | | | | | 89,7 | 6,9 | 5,2 | 18 |

NPMI: N-Phenylmaleinimid
MMA : Methylmethacrylat
α-MS: α-Methylstyrol

**Patentansprüche**

1. Thermoplastische Formmassen, enthaltend

   A) 98 bis 40 Gew.-% eines Vinylhalogenidpolymerisats

   B) 2 bis 60 Gew.-% eines Pfropfmischpolymerisats

   aufgebaut aus $b_1$) 4 bis 30 Gew.-% bezogen auf das Propfmischpolymerisat, eines kautschukartigen Polymeren mit einer Glasübergangstemperatur kleiner 0°C als Pfropfgrundlage, $b_2$) 94 bis 50 Gew.-% einer oder mehrerer innerer Pfropfhüllen aufgebaut aus

   $b_{21}$) 3 - 40 Gew.-% mindestens eines N-substituierten Maleinimids

   $b_{22}$) 0 - 97 Gew.-% mindestens eines Alkylesters der Methacrylsäure

   $b_{23}$) 0 - 80 Gew.-% mindestens einer aromatischen Vinylverbindung

   $b_{24}$) 0 - 60 Gew.-% mindestens eines ungesättigten Nitrils

   $b_{25}$) 0 - 20 Gew.-% weiterer Monomere

   und $b_3$) Z bis 20 Gew.-% einer von den Pfropfhüllen $b_2$) verschiedenen äußeren Pfropfhülle, die zu mehr als 60 Gew.-% aus einem Alxylmethacrylat mit 1 - 8 C-Atomen im Alkylteil oder einer Mischung aus einer aromatischen Vinylverbindung und Acrylnitril im Gewichtsverhältnis 10:1 bis 1:1 besteht.

2. Thermoplastische Formmasse nach Anspruch 1 mit einer oder mehreren inneren Pfropfhüllen $b_2$) aufgebaut aus

   $b_{21}$) 5 - 30 Gew.-% mindestens eines N-substituierten Maleinimids und

   $b_{22}$) 70 - 95 Gew.-% mindestens eines Alkylesters der Methacrylsäure.

3. Thermoplastische Formmasse nach Anspruch 1 mit einer oder mehreren inneren Pfropfhüllen $b_2$) aufgebaut aus

   $b_{21}$) 5 - 30 Gew.-% mindestens eines N-substituierten Maleinimids

   $b_{23}$) 77,3 - 35 Gew.-% mindestens einer aromatischen Vinylverbindung

   $b_{24}$) 7,7 - 35 Gew.-% mindestens eines ungesättigten Nitrils,

   wobei das Gewichtsverhältnis von aromatischer Vinylverbindung zum ungesättigten Nitril zwischen ca. 10:1 und 1:1 liegt.

4. Thermoplastische Formmasse nach den Ansprüchen 1 bis 3, wobei die äußere Pfropfhülle $b_3$) zu mehr als 80 Gew.-% aus Methylmethacrylat besteht.

5. Verwendung der thermoplastischen Formmassen gemäß den Ansprüchen 1 bis 4 zur Herstellung von Formkörpern.

6. Formkörper erhältlich aus thermoplastischen Formmassen gemäß den Ansprüchen 1 bis 4.

**Claims**

1. A thermoplastic molding material containing

   A) from 98 to 40% by weight of a vinyl halide polymer and

   B) from 2 to 60% by weight of a graft copolymer composed of $b_1$) from 4 to 30% by weight, based on the graft copolymer, of a rubber-like polymer having a glass transition temperature of less than 0°C, as the grafting base, $b_2$) from 94 to 50% by weight of one or more inner graft shells composed of

   $b_{21}$) 3-40% by weight of at least one N-substituted maleimide,

   $b_{22}$) 0-97% by weight of at least one alkyl ester of methacrylic acid,

   $b_{23}$) 0-80% by weight of at least one aromatic vinyl compound,

   $b_{24}$) 0-60% by weight of at least one unsaturated nitrile and

   $b_{25}$) 0-20% by weight of further monomers

   and $b_3$) from 2 to 20% by weight of an outer graft shell which differs from the graft shells $b_2$) and consists of more than 60% by weight of an alkyl methacrylate where the alkyl moiety is of 1-8 carbon atoms or of a mixture of an aromatic vinyl compound and acrylonitrile in a weight ratio of from 10 : 1 to 1 : 1.

2. A thermoplastic molding material as claimed in claim 1, having one or more inner graft shells $b_2$) composed of

$b_{21}$) 5-30% by weight of at least one N-substituted maleimide and

$b_{22}$) 70-95% by weight of at least one alkyl ester of methacrylic acid.

3. A thermoplastic molding material as claimed in claim 1, having one or more inner graft shells $b_2$) composed of

$b_{21}$) 5-30% by weight of at least one N-substituted maleimide,

$b_{23}$) 77.3-35% by weight of at least one aromatic vinyl compound and

$b_{24}$) 7.7-35% by weight of at least one unsaturated nitrile,

the weight ratio of aromatic vinyl compound to the unsaturated nitrile being from about 10 : 1 to 1 : 1.

4. A thermoplastic molding material as claimed in any of claims 1 to 3, wherein the outer graft shell $b_3$) consists of more than 80% by weight of methyl methacrylate.

5. Use of the thermoplastic molding material as claimed in any of claims 1 to 4 for the production of moldings.

6. A molding obtainable from a thermoplastic molding material as claimed in any of claims 1 to 4.

**Revendications**

1. Masses à mouler thermoplastiques, contenant

A) 98 à 40% en poids d'un polymère d'halogénure de vinyle,

B) 2 à 60% en poids d'un copolymère greffé, composé de

$b_1$) 4 à 30% en poids, par rapport au copolymère greffé, d'un polymère caoutchouteux ayant une température de transition vitreuse inférieure à 0°C et servant de base de greffage,

$b_2$) 94 a 50% en poids d'une ou de plusieurs enveloppes internes greffées, se composant de

$b_{21}$) 3-40% en poids d'au moins un maléimide N-substitué,

$b_{22}$) 0-97% en poids d'au moins un ester alkylique de l'acide méthacrylique,

$b_{23}$) 0-80% en poids d'au moins un composé vinylaromatique,

$b_{24}$) 0-60% en poids d'un nitrile insaturé,

$b_{25}$) 0-20% en poids d'autres monomères, et

$b_3$) 2 à 20% en poids d'une enveloppe externe greffée qui est différente des enveloppes greffées $b_2$) et qui se compose, pour plus de 60% en poids, d'un méthacrylate d'alkyle à 1-8 atomes de carbone dans la partie alkyle, ou d'un mélange d'un composé vinylaromatique et d'acrylonitrile dans un rapport pondéral de 10:1 à 1:1.

2. Masses à mouler thermoplastiques selon la revendication 1, comportant une ou plusieurs enveloppes internes greffées $b_2$) se composant de

$b_{21}$) 5-30% en poids d'au moins un maléimide N-substitué et

$b_{22}$) 70-95% en poids d'au moins un ester alkylique de l'acide méthacrylique.

3. Masses à mouler thermoplastiques selon la revendication 1, comportant une ou plusieurs enveloppes internes greffées $b_2$) se composant de

$b_{21}$) 5-30% en poids d'au moins un maléimide N-substitué,

$b_{23}$) 77,3-35% en poids d'au moins un composé vinylaromatique et

$b_{24}$) 7,7-35% en poids d'au moins un nitrile insaturé,

le rapport pondéral du composé vinylaromatique au nitrile insaturé étant compris entre 10:1 et 1:1 environ.

4. Masses à mouler thermoplastiques selon l'une quelconque des revendications 1 a 3, l'enveloppe externe greffée $b_3$) se composant de méthacrylate de méthyle pour plus de 80% en poids.

5. Utilisation des masses à mouler thermoplastiques selon l'une quelconque des revendications 1 à 4 pour la fabrication de corps moulés.

6. Corps moulés, obtenus à partir de masses à mouler thermoplastiques selon l'une quelconque des revendications 1 à 4.